# EUROPEAN PATENT APPLICATION

(11) **EP 3 725 486 A1**
(43) Date of publication of application: **21.10.2020**
(21) Application number: 19169978.4
(22) Date of filing: 17.04.2019
(51) Int. Cl.: B29C 41/04, B29C 41/06, B29C 41/22, B29C 41/36

(54) **DIE FOR ROTATIONAL MOULDING WITH BUFFER APPARATUS**

(71) Applicant: Schoeller Allibert GmbH, 19057 Schwerin (DE)
(72) Inventor: ALARCON PALLAS, Luis, 08191 Rubi Barcelona (ES); DURAN SOLER, Ricard, 08224 Terrassa CP Barcelona (ES)
(74) Representative: Winter, Brandl, Fürniss, Hübner, Röss, Kaiser, Polte - Partnerschaft mbB

(57) **Abstract**

The present disclosure concerns a mould (10) for rotational moulding of manufactured articles of plastic material, comprising at least two mould parts (12) and at least one fill opening (14) suitable for filling the mould with a powdered or granulated thermoplastic raw material (P).

The mould (10) comprises a buffer device (16) arranged at the outer side of and in communication with the opening (14), which in turn comprises a buffer reservoir (18) fillable with a predetermined quantity of the thermoplastic raw material (P) and an actuator (20) configured to move the predetermined quantity of thermoplastic raw material (P) from the buffer reservoir (18) into the mould (10) via the opening (14).

A purpose of the present invention is to make a mould or a moulding device for the rotational moulding of plastic materials that is able to produce products with comparatively low volume / surface area ratios and large wall thicknesses

## Description

The present invention relates to a mould for rotational moulding with a buffer device.

In the state of the art, the moulding technology called "rotational moulding" or "Roto-moulding" is dedicated to the production of hollow manufactured articles starting from various plastics (polymers). The rotational moulding technology provides the use of a specific mould in which a predetermined amount of liquid or powdered plastic is arranged. After the mould is closed, it is rotated about two perpendicular axes and heated, so that the hot material stratifies on the inner face of the mould itself. Once the process has ended, the mould is cooled and, after reopening, the moulded piece or manufactured article is removed.

In systems according to the prior art, the moulds for the rotational moulding are introduced into hot air ovens and their heating takes place by convection. Moreover, due to the high temperature of the oven (between 280°C and 350°C), it is also technically difficult to apply external elements to the mould.

Generally, the mould is filled with a predetermined quantity or "shot" of plastic raw material. The raw material is usually provided as a thermoplastic powder or granulate. A specific weight amount of said powder constitutes one shot that results in the manufactured article having a desired wall thickness.

As a rule of thumb, the powdered raw material takes up thrice the volume in its solid form, when compared to the molten and cured plastic material in the end product. In known moulds for rotational moulding there is therefore a maximum wall thickness that can be manufactured. This maximum wall thickness is achieved, when the mould is completely filled with powdered raw material. In typical products of rotational processes such as large tanks, this is not an issue because the ratio of volume with respect to surface area is large. However, when producing hollow bodies with a low volume / surface area ratio, in which at the same time a large wall thickness is required, the issue may arise that the product cannot be produced with a desired material strength.

The purpose of the present invention is therefore to make a mould for the rotational moulding of plastic materials, which is able to overcome the aforementioned drawbacks of the prior art in a extremely simple, cost-effective and particularly functional manner.

In detail, a purpose of the present invention is to make a mould or a moulding device for the rotational moulding of plastic materials that is able to produce products with comparatively low volume / surface area ratios and large wall thicknesses.

These purposes according to the present invention are accomplished by making a mould for the rotational moulding of plastic materials as outlined in claim 1 or a rotational moulding device as outlined in claim 14. The above mentioned problems are also solved by a method according to claim 10. Further characteristics of the invention are highlighted by the dependent claims.

In accordance with the invention there is provided a mould for rotational moulding of manufactured articles of plastic material. The mould comprises at least two mould parts that form a mould cavity together. The mould further comprises at least one fill opening suitable for filling the mould with a powdered or granulated thermoplastic raw material. The mould also comprises a buffer device that is arranged at the outer side of the mould and in communication with the opening. The buffer device comprises a buffer reservoir that is fillable with a predetermined additional/buffer quantity of the thermoplastic raw material. In other words an excess quantity, which exceeds the volume of the mould cavity before the rotational moulding process can be buffered in the buffer device. The buffer device further comprises an actuator that is configured to move said predetermined buffer quantity of thermoplastic raw material from the buffer reservoir into the mould via the opening. In particular, the buffer device (the actuator) is configured to move said additional/buffer quantity of the thermoplastic raw material into the mould cavity during and/or after the thermoplastic raw material within the cavity melts as part of the rotational moulding process. That is to say the buffer device remains mounted on the mould during the entire moulding process. In other words, according to the invention there is provided a mould for use in a rotational moulding apparatus that is provided with an additional buffer reservoir that is in communication with its inner cavity and configured to hold an additional amount of (powdered or granulated) raw material. Said buffer reservoir is part of a buffer device that is configured to move said additional amount of raw material into the mould cavity by means of an actuator. With a mould comprising such a buffer device, it is possible to completely fill the mould with raw material, fill an additional quantity of raw material into the buffer reservoir and move said additional quantity into the mould cavity once the raw material previously filling up the cavity has molten (thereby freeing up volume within the cavity). As such the aforementioned mould solves the aforementioned problem and allows for the production of articles having a low volume to surface area ratio and comparatively high wall thicknesses.

According to a preferred embodiment of the invention the buffer device may have the form of a cylinder/piston pairing, wherein the piston is (linearly) movable within the (hollow) cylinder, wherein the piston is movable from a retracted position, in which the cylinder is filled with thermoplastic raw material, to a forward position, thereby pushing thermoplastic raw material into the mould. In other words the buffer reservoir may be a hollow cylinder exhibiting an internal volume that is fillable with raw material and the actuator may be a (complementary) piston that is movable within the hollow cylinder and can thus push the raw material from the buffer reservoir into the mould cavity through the fill opening.

According to a preferred embodiment of the invention the side walls of the buffer reservoir (e.g. the cylinder) may be thermally insulated and/or cooled. This has the advantageous effect that the raw material stored within the buffer reservoir can be prevented from melting, which would cause plastic material to stratify the inner face of the buffer reservoir.

According to a further preferred aspect of the invention the actuator can comprise one or more spring members that bias the piston into the forward position. This constructional design allows for a comparatively easy implementation of the actuation movement of the cylinder. Also no separate control is required because the cylinder will start pushing the buffered raw material into the cavity of the mould as soon as the raw material inside the mould begins to melt and volume is freed up. A simple and robust design of the actuating mechanism is of special importance in rotational moulding applications, since the buffer device is mounted directly on the mould, which is rotated around multiple axes and subjected to high temperatures.

According to a preferred embodiment of the invention the at least one spring member can be thermally insulated and/or a spring suitable for use in temperatures above 150 °C. This allows for multiple uses of the same spring member(s) with the buffer device.

According to a preferred embodiment of the invention the at least one spring has a spring force greater than the weight force of the total thermoplastic raw material filled into the mould and the buffer reservoir. Because the mould is continuously rotated during the moulding process it is important that the buffer device or more precisely the piston does not yield, when subjected to the weight force of the material within the mould, which could cause leakage of material out of the fill opening. Alternatively a closing mechanism may be provided for closing the fill opening once the additional raw material within the buffer reservoir has been moved into the mould cavity.

According to an alternative preferred embodiment of the invention the buffer device can a pneumatic or hydraulic circuit (actuator) for actuating the piston. Such an embodiment is particularly useful e.g. in rotational moulding apparatuses that comprise a pneumatic circuit for applying a specific internal pressure to the mould cavity. In this case, the pneumatic pressure generator provided for applying a pressure to the mould cavity may additionally be used to drive the piston of the buffer device.

According to a preferred embodiment of the invention the piston can be releasably attached to the cylinder, such that the piston may be temporarily removed for filling the mould and the cylinder with the thermoplastic raw material. For example the piston or a piston assembly may be fastened to the cylinder via buckles, a thread pairing, a bayonet lock or other easily releasable means that also allow for quick and easy reassembly. In turn, the cylinder can be permanently mounted onto the mould, e.g. by means of fasteners such as screws or bolts or by welding.

According to a preferred embodiment of the invention the mould can comprise two or more buffer devices, which can preferably be symmetrically distributed over the mould. As the skilled person will appreciate, each buffer device will be associated with a fill opening. This feature allows for a more uniform introduction of the raw material into the mould cavity.

A further aspect of the invention concerns a method for manufacture by rotational moulding with a thermoplastic raw material in powdered or granulated form comprising at least the following steps:
- filling a mould completely with the thermoplastic raw material;
- filling a buffer reservoir with the thermoplastic raw material;
- heating the mould;
- moving the thermoplastic raw material from the buffer reservoir into the mould during or after the heating of the mould.

Preferably, prior to filling of the mould the mould may be rotated into an orientation, in which at least one fill opening is positioned in an upper part of the mould. Further preferably the method may comprise a step in which the orientation of the mould is adjusted after the filling of the mould and prior to the filling of the buffer reservoir.

In a preferred production method conducted with a mould according to one of the aforementioned aspects having a piston that is removably coupled to a cylinder, the method for manufacture may further comprise the steps of
- removing the piston prior to the filling of the mould; and
- reattaching the piston to the cylinder once the buffer reservoir is filled.

A further aspect of the invention concerns a rotational moulding apparatus comprising a mould according to one of the aforementioned aspects, a rotating device (e.g. a robotic arm or the like) that is configured to rotate the mould around two axis of rotation and a heating device for heating the mould, in order to melt the thermoplastic raw material.

According to a preferred embodiment the rotational moulding apparatus may be a carousel type rotational moulding machine.

The characteristics and advantages of a mould for the rotational moulding of plastic materials according to the present invention will become clearer from the following description, given as a non-limiting example, referring to the attached schematic drawings, in which:
Figure 1 is a schematic view of a rotational moulding apparatus highlighting different production steps of the process;
Figure 2A and 2B are comparative views of the same manufactured article having high and low wall thickness;
Figure 3A is a schematic view of a mould having a buffer device according to the invention in a state in which the buffer device is loaded;
Figure 3B is a schematic view of the device of Figure 3A, in which the thermoplastic raw material is molten;
Figure 4A is a detailed view of a buffer device according in an emptied state; and
Figure 4B is a detailed view of the buffer device according in a loaded state.

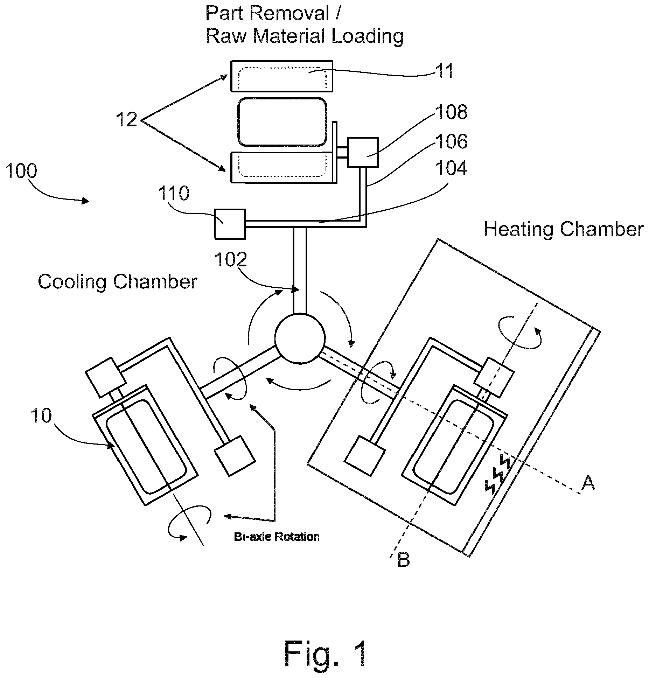

With reference in particular to figure 1, a generic apparatus 100 for the rotational moulding is shown, on which a mould 10 according to the present invention can be mounted. The machine 100 is of the type comprising an arm 102 that supports a first movable frame 104 that can rotate about a first motorized axis A, for example horizontal. Inside the first movable frame 104 a second movable frame 106 is supported that can rotate about a second motorized axis B, for example vertical, orthogonal to the first motorized axis A. On the second movable frame 106 the mould 10 is mounted, so that it can rotate about the motorized axes A and B. Respective motors 108 and 110 drive the rotation of the movable frames 104 and 106 about the two corresponding axes A and B. Inside the second movable frame 106 the mould 10 is mounted, which comprises two half-moulds 12 that form a mould cavity 11 together.

The depicted rotational moulding apparatus 100 is a so called carousel machine. Such machines have a number of arms that rotate in unison between different stations of the machine that represent different steps of the rotational moulding process. In the depicted example one arm 102 is in the loading/reloading area, where the finished product is removed from the mould and the mould is refilled with raw material. A second arm 102 is in a heating chamber (basically an oven), where the loaded plastic material is heated and molten and the mould is rotated around the two axes A and B in order to stratify the inner face of the mould 10 with molten polymer. A third arm is in the cooling chamber, where the molten polymer is cured to form the final product. The fixed-arm carousel works well when working with identical cycle times on each arm. It is also known to use independent-arm carousel machines with 3 or 4 arms that can move separately from the other. This allows for different size moulds, with different cycle times.

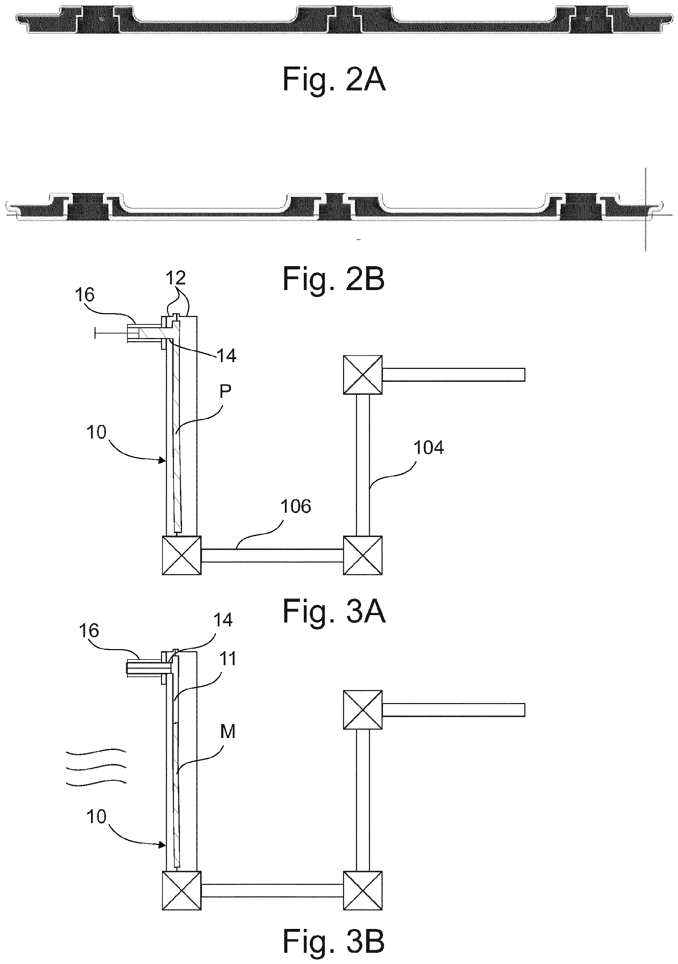

In known moulds for rotational moulding there is a maximum wall thickness that is possible to manufacture. This maximum wall thickness is achieved, when the mould is completely filled with powdered raw material. In typical products of rotational processes such as large tanks, this is not an issue because the ratio of volume with respect to surface area is large. However, when producing hollow bodies with a low volume / surface area ratio, in which at the same time a large wall thickness is required, the issue may arise that the product cannot be produced with a desired material strength. Figures 2A and 2B show an exemplary product, in which this can be an issue. The depicted product is a skid for a bulk container. Said skid has a comparatively flat and elongate geometry and thus exhibits a low volume to surface area ratio. The mould cavity 11 can take powdered polymer in a quantity of approximately 2 kg. This results in a wall thickness of 3 to 4mm in the end product as shown in Figure 2A. However, said skid for bulk containers has be able to transfer comparatively large loads. For this reason comparatively large wall thicknesses of up to 8mm are required. This would require a quantity of approximately 3.6 kg powdered polymer raw material inside the mould. It follows that such a skid could not be produced with the moulds as available in the state of the art so far.

The solution to this problem according to the present invention is illustrated in figure 3A. Said figure shows a cross sectional view through a mould 10 that is mounted on an apparatus 100 as described above. The mould 10 comprises two mould parts 12 that are joined together and exhibit an internal cavity 11 that is filled completely with a powdered thermoplastic raw Material P. The mould further comprises a opening 14, through which the mould can be filled with the thermoplastic raw Material P in a closed state, in which the mould parts 12 are assembled together.

In order to arrive at a desired quantity of raw material (e.g. 3,6 kg) that may exceed the maximum hold capacity of the mould (e.g. 2,0 kg) a buffer device 16 is arranged at the outer side of and in communication with the opening 14. The buffer device 16 comprises a buffer reservoir 18 that is able to hold an additional quantity of the thermoplastic raw material P, in order to arrive at the desired total quantity of raw material. The buffer device 16 further comprises an actuator 20 that is configured to move said predetermined quantity of thermoplastic raw material P from the buffer reservoir 18 into the mould 10 through the opening 14.

As can be seen in figure 3B, as soon as the arm 102 holding the mould 10 moves from the loading station to the heating station and the thermoplastic raw material starts to melt, volume is freed up within the cavity 11 of the mould 10 because the melt M only takes up roughly one third of the volume that the powdered raw material P does. The actuator 20 of the buffer device 16 moves the additional quantity of the thermoplastic raw material P into the heated mould 10, such that the desired total quantity of the thermoplastic raw material P is located inside the mould 10. During or after this step of feeding the additional quantity of the thermoplastic raw material P into the mould cavity 11, the mould is rotated so as to stratify the inner face of the mould with the melt.

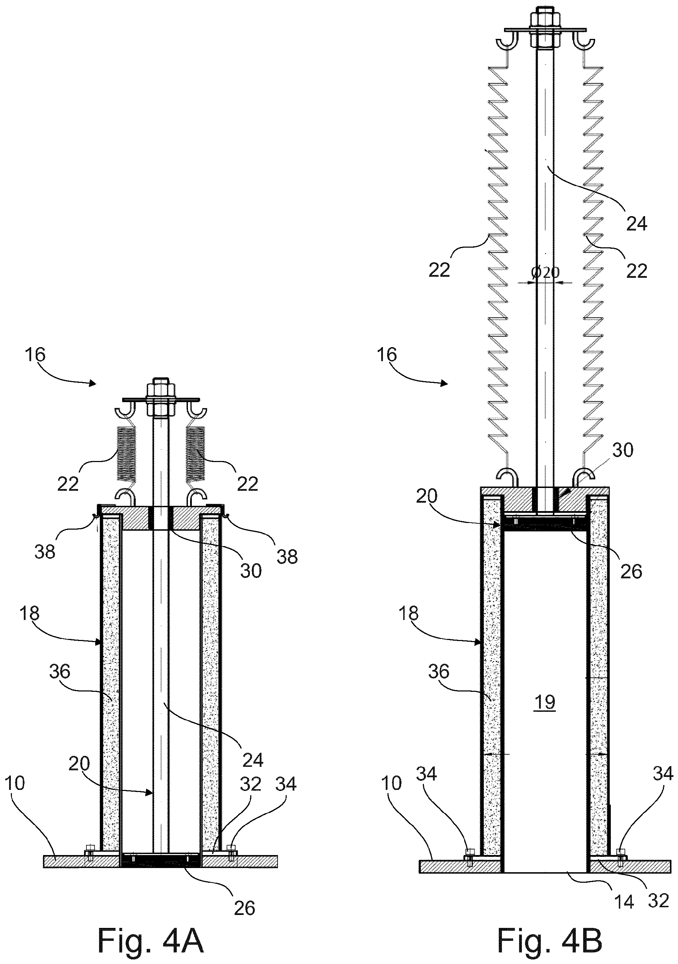

Figures 4A and 4B show a preferred embodiment of a buffer device 16 according to the present invention in a cross-sectional view. As already mentioned the buffer device 16 comprises a buffer reservoir 18 for holding the additional quantity of the thermoplastic raw material P. In the depicted embodiment the buffer reservoir 18 is a hollow cylinder 18 with a predetermined inner volume 19. The buffer device 16 according to the preferred embodiment further comprises an actuator 20 in form of a piston that is movable within the inner volume of the hollow cylinder 18. The buffer device 16 is mounted onto the mould 10 from the outside such that it is aligned with the mould opening 14. Thus, when the piston 20 is moved forwards, towards the fill opening 14, it pushes the raw material P into the mould cavity 11. The piston 20 comprises a piston shaft 24 and a piston head 26 that has a complementary cross-section to the inner (hollow) cross-section of the cylinder 18 so as to completely push all of the raw material P out of the cylinder 18.

The buffer reservoir 18 is closable on its end opposing the fill opening 14 via a buffer reservoir or cylinder lid 28. The cylinder lid 28 has a central through bore 30 for guiding the piston shaft 24 and thereby preventing a lateral tilting movement of the piston 20. Preferably the gliding contact surfaces both between the piston head 26 and the inner face of the cylinder 18 and between the piston shaft 26 and the through bore 30 may be coated with a material that improves gliding properties such as e.g. polytetrafluoroethylene.

In order to achieve the forward movement of the actuator 20, the buffer device 16 according to the preferred embodiment comprises a biasing member 22 that is moved against its biasing direction, when the buffer reservoir 18 is filled and biases the actuator into a forward position, in which the actuator 20 completely traverses the buffer reservoir 18 and the buffer reservoir 18 is thus emptied. In the specific embodiment shown in figures 4A and 4B the biasing member 22 is a pair of tension springs that are anchored on a rear end of the piston shaft 24 and the cylinder lid 28. In the constellation shown in figure 4B.

As can be seen in figure 4A the piston is designed such that it halts its forward movement in the forward position such that the piston head 24 is in flush alignment with the inner face of the mould 10. This serves to produce a uniform surface of the manufactured article/product. An abutment (not shown) may be used to limit travel of the piston 20 in such a fashion.

In the embodiment of figures 4A and 4B, the buffer device 16 is mounted onto the mould 10 via a base plate 32. Here, the base plate 32 is fastened to the mould 10 by means of fasteners 34. Preferably the base plate 32 may be designed of a thermally insulating material. Additionally or alternatively, the buffer reservoir 18 may preferably comprise an insulating layer 36 that thermally insulates the buffer reservoir 18. This has the background that heat transfer from the heating chamber and from the heated mould 10 shall be inhibited, in order to prevent the additional quantity of the thermoplastic raw material P that is held in the buffer reservoir 16 from melting and thus from stratifying the inner face of the buffer reservoir 16. In the depicted preferred embodiment, the cylinder 16 has a layer of glass fibre reinforced thermosetting resin of approximately 25 mm thickness for providing thermal insulation to the interior of the buffer reservoir 18.

In order to provide easy loading of the buffer device 16, the actuator 20 is removable from the buffer reservoir 18. In use, the actuator 20 may simply be removed and the mould 10 can be filled through the cylinder 18. Once the cavity 11 of the mould 10 is completely filled, the buffer reservoir 18 itself may be filled with the desired additional quantity of thermoplastic raw material P. After filling of the buffer reservoir 18, the actuator 20 is reassembled onto the buffer device 16. In the embodiment depicted in figures 4A and 4B, the cylinder lid 28 is releasably mounted onto the cylinder by means of buckles 38. Of course other suitable fastening means may also be utilized such as e.g. a thread pairing, a snap-fit engagement, a bayonet-type lock or the like. By opening the buckles 38, the cylinder lid 28 can easily be removed together with the piston 20 and the biasing members 22. Once the mould 10 and the buffer reservoir 18 are filled with the desired amount of raw material, the cylinder lid 28 is reassembled onto the cylinder 18. During reassembly of the cylinder lid 28, because the piston 20 is forced into a retracted position by the raw material filling the cylinder 18, the biasing members 22 are pre-tensioned as shown in figure 4B.

The mould for the rotational moulding of plastic materials of the present invention thus conceived in any case can undergo numerous modifications and variants, all of which are covered by the same inventive concept. For example instead of using an oven for heating, the mould may be provided with one or more heating elements, for example electrical resistances, for the melting of the plastic material that is introduced into the two half-moulds 12 during the production of the manufactured articles. With the application of heating elements 16 on the surface of the mould 10 it is possible to make a temperature control system that allows the mould 10 itself to be heated in a differentiated manner, creating independent areas with an autonomous heating circuit.

Additionally, the mould may be provided, in a per se known way, with a pneumatic circuit capable of applying a predetermined pressure, positive or negative (vacuum), inside the mould cavity.

Moreover, all of the details can be replaced by technically equivalent elements. In practice, the materials used, as well as the shapes and sizes, can be whatever according to the technical requirements. The scope of protection of the invention is therefore defined by the attached claims.

### Reference signs

- 10: mould;
- 12: mould part;
- 11: mould cavity;
- 14: fill opening;
- 16: buffer device;
- 18: buffer reservoir;
- 19: inner volume;
- 20: actuator;
- 22: biasing member;
- 24: piston shaft;
- 26: piston head;
- 28: cylinder lid;
- 30: through bore;
- 32: base plate;
- 34: fasteners;
- 36: insulating layer;
- 38: buckles;
- 100: rotational moulding apparatus;
- 102: arm;
- 104: first frame;
- 106: second frame;
- 108: first motor;
- 110: second motor

## Claims

1. A mould (10) for rotational moulding of manufactured articles of plastic material, comprising at least two mould parts (12) that form a mould cavity (11) together and at least one fill opening (14) suitable for filling the mould (10) with a powdered or granulated thermoplastic raw material (P),
**characterized by**
a buffer device (16) arranged at the outer side of and in communication with the opening (14) and which comprises a buffer reservoir (18) fillable with a predetermined quantity of the thermoplastic raw material (P) and an actuator (20) configured to move the predetermined quantity of thermoplastic raw material (P) from the buffer reservoir (18) into the mould (10) via the opening (14).

2. A mould (10) according to claim 1, **characterized in that** the buffer device is a cylinder/piston pairing with a piston (20), wherein the piston is movable from
a retracted position, in which the cylinder is filled with thermoplastic raw material (P),
to a forward position, thereby pushing thermoplastic raw material (P) into the mould (10).

3. A mould (10) according to claim 1 or 2, **characterized in that** the side walls of the buffer reservoir (16) are thermally insulated.

4. A mould (10) according to one of claims 2 or 3, **characterized in that** the actuator comprises one or more spring members that bias the piston into the forward position.

5. A mould (10) according to claim 4, **characterized in that** the at least one spring member is thermally insulated and/or a spring suitable for use in temperatures above 150 °C.

6. A mould (10) according to one of claims 4 or 5, wherein the at least one spring has a spring force greater than the weight force of the total thermoplastic raw material filled into the mould and the buffer reservoir.

7. A mould (10) according to claim 2 **characterized in that** the buffer device comprises a pneumatic or hydraulic circuit for actuating the piston.

8. A mould according to one of claims 2 to 7, **characterized in that** the piston is releasably attached to the cylinder, such that the piston may be temporarily removed for filling the mould and the cylinder with the thermoplastic raw material.

9. A mould according to one of claims 1 to 7, **characterized in that** the mould comprises two or more buffer devices (16), preferably symmetrically distributed on the mould.

10. A method for manufacture by rotational moulding with a thermoplastic raw material (P) in powdered or granulated form comprising the steps:
Filling a mould (10) completely with the thermoplastic raw material (P);
Filling a buffer reservoir (18) with the thermoplastic raw material (P);
Heating the mould;
Moving the thermoplastic raw material (P) from the buffer reservoir into the mould (10) during and/or after the heating of the mould.

11. The method of claim 10, wherein prior to filling the mould is rotated into an orientation, in which at least one fill opening is positioned in an upper part of the mould.

12. The method of claim 11, wherein the orientation of the mould is adjusted after the filling of the mould (10) and prior to the filling of the buffer reservoir (18).

13. The method of claim 10 or 11, wherein the mould comprises a buffer device according to claim 8 and wherein prior to the filling of the mould and the buffer reservoir a piston of the buffer device is removed and after completion of the filling of the mould and the buffer reservoir the piston is attached to the cylinder.

14. A rotational moulding apparatus (100) comprising a mould (10) according to one of claims 1 to 13, a rotating device that is configured to rotate the mould (10) around two axis of rotation and a heating device for heating the mould (10).

15. A rotational moulding apparatus (100) according to claim 14, wherein the rotational moulding apparatus is a carousel type rotational moulding machine.
